Europäisches Patentamt

European Patent Office

Office européen des brevets

(11) Publication number: **0 265 007 B1**

(12) **EUROPEAN PATENT SPECIFICATION**

(45) Date of publication of patent specification: **29.01.92** (51) Int. Cl.⁵: **B29D 11/00**, G02B 5/02

(21) Application number: **87201944.3**

(22) Date of filing: **09.10.87**

(54) **Method of manufacturing a diffuse reflector.**

(30) Priority: **13.10.86 NL 8602567**

(43) Date of publication of application:
**27.04.88 Bulletin 88/17**

(45) Publication of the grant of the patent:
**29.01.92 Bulletin 92/05**

(84) Designated Contracting States:
**AT CH DE FR GB IT LI NL**

(56) References cited:
FR-A- 1 236 228     FR-A- 2 349 155
GB-A- 746 667       US-A- 2 928 131
US-A- 4 407 879     US-A- 4 470 871

PATENT ABSTRACTS OF JAPAN, vol. 8, no.
97 (P-272)[1534], 8th May 1984; & JP-A-59 10
901 (NIHON KOUGAKU KOGYO K.K.)
20-01-1984

IBM TECHNICAL DISCLOSURE BULLETIN, vol.
21, no. 9, February 1979, page 3783, New
York, US; A.C. LOWE et al.: "Mechanically
produced anti-reflection surface"

PATENT ABSTRACTS OF JAPAN, vol. 9, no.
82 (C-275)[1805], 11th April 1985; & JP-A-59
213 735 (KURARAY K.K.) 03-12-1984

(73) Proprietor: **N.V. Philips' Gloeilampenfabrieken**
**Groenewoudseweg 1**
**NL-5621 BA Eindhoven(NL)**

(72) Inventor: **Veenvliet, Hendrik**
**c/o INT. OCTROOIBUREAU B.V. Prof. Holst-**
**laan 6**
**NL-5656 AA Eindhoven(NL)**
Inventor: **Raaymakers, Antonius Henricus Ma-**
**ria**
**c/o INT. OCTROOIBUREAU B.V. Prof. Holst-**
**laan 6**
**NL-5656 AA Eindhoven(NL)**
Inventor: **Verkerk, Maarten Johannes**
**c/o INT. OCTROOIBUREAU B.V. Prof. Holst-**
**laan 6**
**NL-5656 AA Eindhoven(NL)**
Inventor: **Witjes, Arnold Hendrikus**
**c/o INT. OCTROOIBUREAU B.V. Prof. Holst-**
**laan 6**
**NL-5656 AA Eindhoven(NL)**

(74) Representative: **Raap, Adriaan Yde et al**
**INTERNATIONAAL OCTROOIBUREAU B.V.**
**Prof. Holstlaan 6**
**NL-5656 AA Eindhoven(NL)**

## Description

The invention relates to a method of manufacturing a diffuse reflector in which a surface pattern is provided in a synthetic resin layer.

Diffuse reflectors are notably used in flat display devices such as liquid crystal display devices (LCDs) and electroscopic display devices, but other uses are not excluded.

A method of the type described in the opening paragraph is described in European Application No. 0,084,930 laid open to public inspection in which a diffusely reflecting metal surface is provided in a liquid crystal display device by providing a thin layer of the reflecting material on a resin layer having projections and recesses. The projections and recesses are provided in advance in the resin layer by means of photolithographic techniques, with a second resin layer functioning as a photoresist. These projections and recesses are therefore provided in a pattern determined in advance by a photomask, with which pattern a surface pattern is provided in the resin layer by means of a photolithographic process. Such a method thus requires inter alia a masking step and an etching step in order to realize a surface structure in a synthetic resin layer via a second layer which is to be removed at a later stage.

British Patent Specification GB 2,066,545A describes another method of manufacturing diffuse reflectors. In this method a metal film is reactively deposited by means of vapour-deposition techniques or sputtering while adding a small quantity of water. A drawback of this reactive deposition with water (or oxygen) is, however, that the composition of the mixture to be used is very critical during the reaction. Upon deposition hydroxides or oxides may also be formed, which may considerably reduce the light dispersion.

GB 746.667 describes a method of manufacturing a diffuse reflector in which a plastic base is stretched as a whole and then provided with an elastic paint, after which the tension is released. The elastic paint is thus caused to wrinkle. In display devices the area of the synthetic resin layer generally has to remain fixed during manufacturing, so this method is not applicable to display manufacturing.

It is an object of the invention to provide methods of manufacturing a diffuse reflector in which no previous photolithographic step is required while in addition the drawbacks of reactive deposition do not occur.

It is a further object of the invention to provide such methods in which no mechanical stretching of the synthetic resin layer is used so that it is especially suited for the manufacture of display devices.

The invention is based on the recognition that notably for photosensitive resin layers a roughening method can be used by means of which a suitable surface pattern is obtained for a diffuse reflector without a structure determining the reflection being defined in advance.

The method according to the invention is characterized in that the surface pattern is obtained by means of roughening the top layer of the synthetic resin layer which roughening is performed by a treatment in a freon-containing plasma or by means of UV radiation and subsequent heating to a temperature between 180°C and 250°.

In the heating step (180°C-250°C) some relaxation occurs in the top layer so that roughening of the surface layer occurs. By suitable choice of material, layer thickness and process parameters such as etching time, heating time, freon content etc. structures are formed such that after coating with a reflecting material satisfactory diffuse reflectors are obtained.

The profile of the roughened layer provided in a synthetic resin layer may also be transferred into a subjacent substrate by means of etching (for example, reactive ion etching or plasma etching). This substrate may consist of, for example, a polymer or other synthetic mat erial which of itself is not sensitive to the above-mentioned roughening treatment. After the surface profile transferred by means of etching in the substrate is coated with a reflecting layer, a diffuse reflector is obtained again. On the other hand this substrate itself may already consist of a reflecting material in which case transfer of the profile obtained by roughening directly leads to a diffuse reflector.

The invention will now be described in greater detail with reference to some embodiments and the accompanying drawing, in which

Figures 1 to 3 diagrammatically show the manufacture of a diffuse reflector by means of a method according to the invention;

Figure 4 shows a detail of Figure 3, whilst

Figures 5 and 6 diagrammatically show another method according to the invention, and

Figure 7 shows a modification of Figure 6.

In a method according to the invention the starting material is a synthetic resin layer, in this example a photoresist layer 1 of the type Waycoat HPR (Hunt Positive Projection Resist) 204, having a thickness of approximately 1.2 $\mu$m. The layer 1 which is baked at a temperature of approximately 90° may be exposed, if necessary, and it may be subjected to a second baking step of approximately 30 minutes at approximately 120°C. In the relevant example the photoresist layer is provided on a supporting plate 2 of, for example, glass. In a liquid crystal device this glass plate may constitute one of the two glass plates which together enclose the liquid crystal material.

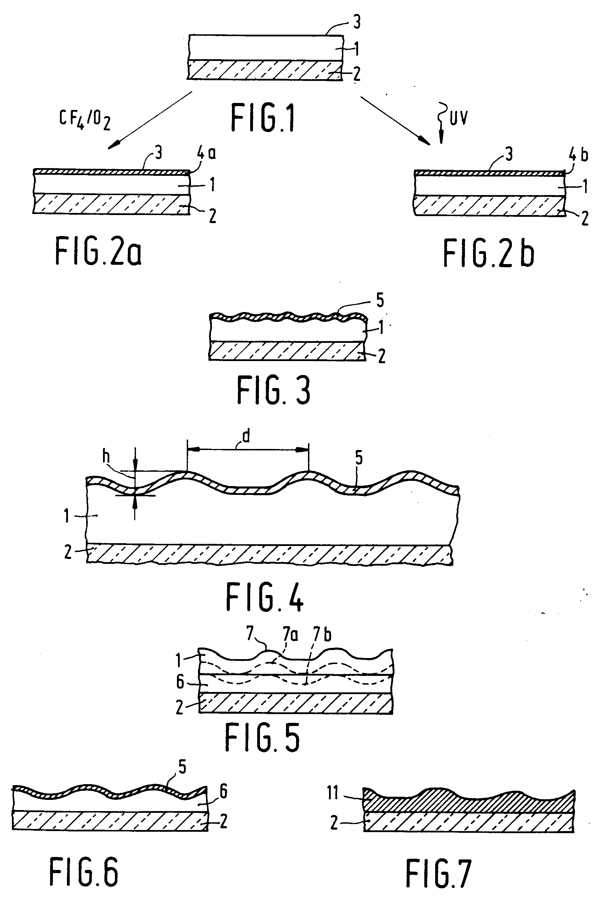

In a first modification of the method according to the invention the photoresist layer 1 is treated for some minutes in a freon etchant to which several percents of oxygen have been added. Due to physical-chemical modification a top layer 4[a] is created on the surface 3, which layer had a close structure with a strong cross-linking, possibly because teflon-like reaction products are formed (Figure 2[a]).

A close structure on the surface 3 may also be obtained by irradiation of the layer 1 with UV light (dose approximately 10 $J/cm^2$) whose wavelength is, for example, in the range of 200-320 nm. In this case so-called cross-linking occurs so that also a top layer 4[b] is formed with a strong cross-linking (Figure 2[b]).

Both the layer 4[a] (Figure 2[a]) and the layer 4[b] in Figure 2[b] are under comparatively high chemical stresses. When the assembly is heated for approximately $\frac{1}{2}$ hour to approximately $200°C$ the layers 4 relax because the subjacent photoresist layer 1 which is not attacked by the etching treatment or UV radiation starts to flow to some extent. As a result the surface 3 is rippled so that the surface is deformed in such a manner that after vapour deposition of a reflecting material, for example, a 0.3 $\mu$m thick layer 5 of silver or aluminium a satisfactory diffuse reflector is obtained.

Dependent on the process parameters used reflectors can be obtained in which the average height variation H (Figure 4) is 10-1000 nanometres and the average mutual distance L between 2 projections is 1-10 $\mu$m. Notably at H $\geq$ 60 nm and L $\geq$ 3.5 $\mu$m a substantially complete (approximately 99%) diffuse reflection occurs.

A structure similar to that of Figure 3 may also be obtained by heating a photoresist layer 1 which, if necessary, is baked, to approximately $175°C$ and by vapour depositing at this temperature a layer of reflecting metal (silver or aluminium) having a thickness of 0.4 $\mu$m or more on the photoresist layer. Under the influence of the interaction of the photoresist and the metal during which possibly released heat and/or mechanical stress plays a role, a kind of roughening of the metal surface occurs again.

The reflecting structure thus obtained may be divided into a plurality of reflectors (sub-structures) by patterning the metal by means of a photo-lithograp hic process and by etching off the photoresist layer with the remaining metal as a mask.

In Figure 5 a substrate 6 is present between the supporting plate 2 and the photoresist layer 1, which substrate consists of a material to which the roughening treatment as described hereinbefore is not applicable, for example, a cross-linked polymer such as kapton. With one of the methods described above the surface of the layer 1 has acquired a profile 7. The device of Figure 5 can now be subjected to such an etching treatment (reactive ion etching or plasma etching) that the profile 7 is partly (profile 7[a]) or entirely (profile 7[b]) transferred into the substrate 6. Dependent on the materials used for the photoresist layer 1 and the substrate 6 this etching treatment may take place under the same conditions (etchant, temperature, etc.) or alternately under different conditions. Due to small differences in etching rates the ultimate structure may slightly deviate from that obtained by the roughening treatment.

After the etching treatment is finished the surface of the exposed substrate 6 with profile 7 is provided with a layer 5 of a reflecting material, (Figure 6) with which a diffuse reflector is obtained again.

The substrate 6 may alternatively consist of a layer 11 of a reflecting material, in this case the reflector is immediately finished when the profile 7 is transferred into the layer 11 by means of etching.

The invention is of course not limited to the embodiments shown, but within the scope of the invention several variations are possible to those skilled in the art.

The invention can also be used with other synthetic resins which can be roughened by the methods described or they can be provided in another way with a thin top layer of plastic material causing roughening upon relaxation.

Dependent on the use of the reflector and consequently on the choice of L and H it is possible to amply vary the said process parameters such as etching times, temperatures, etc. but also the etchants, etc. can be varied.

**Claims**

1. A method of manufacturing a diffuse reflector in which a surface pattern is provided in a synthetic resin layer (1), characterized in that the surface pattern is obtained by means of roughening the top layer (4) of the synthetic resin layer, which roughening is performed by a treatement in a freon-containing plasma or by means of UV-radiation and subsequent heating to a temperature between $180°C$ and $250°C$.

2. A method as claimed in Claim 1, characterized in that a surface pattern is obtained by means of roughening in the top layer (4) of the synthetic resin layer and in that the surface thus obtained is coated with a layer (5) of a reflecting material.

3. A method as claimed in Claim 1 or 2, characterized in that the syntehtic resin layer (1) is provided on a substrate layer (6, 11) and the surface pattern obtained by roughening is at least partly transferred into the subjacent (6, 11) substrate layer by means of etching.

4. A method as claimed in Claim 3, characterized in that after etching the exposed surface is coated with a layer of a reflecting material (5).

5. A method as claimed in Claim 3, characterized in that the substrate consists of a reflecting material (11) and etching is continued until the synthetic resin layer (1) has substantially completely disappeared.

6. A method as claimed in any one of Claims 3 to 5, characterized in that silver or aluminium is used as a reflecting material (5, 11).

## Revendications

1. Procédé pour la fabrication d'un réflecteur diffuseur dans lequel une configuration superficielle est réalisée dans une couche en résine synthétique (1), caractérisé en ce que la configuration superficielle est obtenue par dégrossissage de la couche supérieure (4) de la couche de matière synthétique, ce qui s'effectue par traitement dans un plasma contenant du fréon ou à l'aide de rayonnement ultraviolet suivi d'un chauffage à une température comprise entre 180°C et 250°C.

2. Procédé selon la revendication 1, caractérisé en ce qu'une configuration superficielle est obtenue par dégrossissage de la couche supérieure (4) de la couche de résine synthétique et en ce que la surface ainsi obtenue est recouverte d'une couche (5) en matériau réflecteur.

3. Procédé selon la revendication 1 ou 2, caractérisé en ce que la couche de résine synthétique (1) est appliquée sur une couche de substrat (6, 11) et la configuration superficielle obtenue par dégrossissage est au moins partiellement transmise par décapage à la couche de substrat sous-jacente (6, 11).

4. Procédé selon la revendication 3, caractérisé en ce qu'après décapage, la surface exposée est recouverte d'une couche en un matériau réflecteur (5).

5. Procédé selon la revendication 3, caractérisé en ce que le substrat est constitué par un matériau réflecteur (11) et le décapage est continué jusqu'à ce que la couche de résine synthétique (1) ait pratiquement complètement disparue.

6. Procédé selon l'une des revendications 3 à 5, caractérisé en ce que de l'argent ou de l'aluminium est utilisé comme matériau réflecteur (5, 11).

## Patentansprüche

1. Verfahren zum Herstellen eines Streureflektors, wobei in einer Kunstharzschicht (1) ein Oberflächenmuster angebracht wird, dadurch gekennzeichnet, daß das Oberflächenmuster durch Aufrauhung einer Oberschicht (4) der Kunstharzschicht erhalten wird, wobei diese Aufrauhung erfolgt durch eine Behandlung in einem freonhaltigen Plasma oder durch UV-Bestrahlung und einer nachfolgenden Erhitzung aufeine Temperatur zischen 180°C und 250°C.

2. Verfahren nach Anspruch 1, dadurch gekennzeichnet, daß ein Oberflächenmuster durch Aufrauhung der Oberschicht (4) der Kunstharzschicht erhalten wird und daß die aufdiese Weise erhaltene Oberfläche mit einer Schicht (5) aus einem reflektierenden Material bedeckt wird.

3. Verfahren nach Anspruch 1 oder 2, dadurch gekennzeichnet, daß die Kunstharzschicht (1) aufeiner Trägerschicht (6, 11) vorgesehen wird und das durch Aufrauhung erhaltene Oberflächenmuster durch Ätzung wenigstens teilweise in der unterliegenden Trägerschicht (6,11) übertragen wird.

4. Verfahren nach Anspruch 3, dadurch gekennzeichnet, daß nach dem Ätzen die freigeätzte Oberfläche mit einer Schicht aus einem reflektierenden Material (5) bedeckt wird.

5. Verfahren nach Anspruch 3, dadurch gekennzeichnet, daß der Träger aus einem reflektierenden Material (11) besteht und das Ätzen solange fortgesetzt wird, bis die Kunstharzschicht (1) nahezu völlig verschwunden ist.

6. Verfahren nach einem der Ansprüche 3 bis 5, dadurch gekennzeichnet, daß als reflektierendes Material (5, 11) Silber oder Aluminium verwendet wird.

FIG.1

$CF_4/O_2$

UV

FIG.2a

FIG.2b

FIG. 3

h

d

5

1

2

FIG. 4

7 7a 7b

1

6

2

FIG.5

5

6

2

FIG.6

11

2

FIG.7